Europäisches Patentamt

European Patent Office

Office européen des brevets

(11) Veröffentlichungsnummer: **0 053 396**
**B1**

(19)

(12) # EUROPÄISCHE PATENTSCHRIFT

(45) Veröffentlichungstag der Patentschrift:
27.07.83

(51) Int. Cl.³: **C 02 F 3/12, C 02 F 3/26**

(21) Anmeldenummer: 81110061.9

(22) Anmeldetag: 01.12.81

(54) Verfahren und Vorrichtung zur biologischen Reinigung von Abwasser.

(30) Priorität: 01.12.80 DE 3045158

(43) Veröffentlichungstag der Anmeldung:
09.06.82 Patentblatt 82/23

(45) Bekanntmachung des Hinweises auf die Patenterteilung:
27.07.83 Patentblatt 83/30

(84) Benannte Vertragsstaaten:
AT BE CH DE FR GB IT LI NL

(56) Entgegenhaltungen:
DE-A-2 032 480
DE-A-2 212 715
FR-A-2 307 768

(73) Patentinhaber: Linde Aktiengesellschaft,
Abraham-Lincoln-Strasse 21, D-6200 Wiesbaden (DE)

(72) Erfinder: Fuchs, Uwe, Heiterwanger Strasse 46,
D-8000 München 70 (DE)

(74) Vertreter: Schaefer, Gerhard, Dr. et al, Linde
Aktiengesellschaft Zentrale Patentabteilung,
D-8023 Höllriegelskreuth (DE)

## Verfahren und Vorrichtung zur biologischen Reinigung von Abwasser

Die Erfindung betrifft ein Verfahren zur biologischen Reinigung von Abwasser, bei dem das Abwasser in einem Belebungsbecken mit mehreren Beckenabschnitten in Gegenwart von belebtem Schlamm mit reinem Sauerstoff und/oder Luft begast, das Abwasser-Belebtschlamm-Gemisch aus dem Belebungsbecken abgezogen und in einer Nachklärung zu gereinigtem Wasser und Schlamm aufgeteilt und der Schlamm wenigstens teilweise in das Belebungsbecken zurückgeleitet wird, sowie eine Vorrichtung zur Durchführung des Verfahrens.

Ein solches Verfahren ist beispielsweise aus der DE-C-2 032 480 bekannt. Bei diesem Verfahren zum Behandeln von biochemisch oxidierbare Bestandteile enthaltendem Abwasser wird ein mehr als 50 Vol.-% Sauerstoff enthaltendes Gas nacheinander durch mindestens zwei, jeweils gegenüber der Atmosphäre gasdicht abgeschlossene Beckenabschnitte geleitet. Dabei ist zur Erreichung einer hohen Ausnutzung des im Gas enthaltenen Sauerstoffs bei wirtschaftlichem Energieeinsatz vorgesehen, daß im ersten Beckenabschnitt der Gehalt der Flüssigkeit an suspendierten Feststoffen möglichst hoch gehalten wird und daß die Zufuhr an Flüssigkeit, die Menge des dem ersten Beckenabschnitt zugeführten Gases und die zum Zirkulieren und Mischen in den Beckenabschnitten aufgewandte Energie in Abhängigkeit der im Abgas des letzten Beckenabschnitts enthaltenen Sauerstoffmenge geregelt wird. Da die einzelnen Beckenabschnitte gleiche Volumina aufweisen, reicht aber die Substratkonzentration in den ersten Beckenabschnitten häufig nicht aus, um bei dem durch Rückleiten einer entsprechenden Belebtschlammmenge erzeugten hohen Gehalt an suspendierten Feststoffen den maximal möglichen Abbau organischer Stoffe verwirklichen zu können, so daß dann die maximal mögliche biologische Leistungsfähigkeit des Belebtschlamms nicht voll ausgenutzt wird.

Der Erfindung liegt die Aufgabe zugrunde, ein Verfahren der eingangs genannten Art sowie eine Vorrichtung zur Durchführung des Verfahrens so auszugestalten, daß auf einfache und wirtschaftliche Weise die maximal mögliche biologische Leistungsfähigkeit des Belebtschlamms möglichst weitgehend ausgenutzt wird.

Diese Aufgabe wird erfindungsgemäß dadurch gelöst, daß das Abwasser durch ein Belebungsbecken mit mindestens drei getrennten Beckenabschnitten geleitet wird und die Volumina der einzelnen Beckenabschnitte so gewählt werden, daß die in Strömungsrichtung des Abwassers aufeinanderfolgenden Beckenabschnitte jeweils mindestens ungefähr um das Volumen des ersten Beckenabschnitts größer sind als der vorhergehende Beckenabschnitt.

Mit einer solchen Aufteilung der Beckenabschnitte wird erreicht, daß die Substratkonzentration am Anfang des Belebungsbeckens ständig sehr groß ist, wodurch die Bakterien gezwungen werden, bei jedem Belastungszustand die Maximalatmung und die höchste Wachstumsrate zu verrichten, um dann in den nachfolgenden Beckenabschnitten in Folge Substratabbau und größer werdender Beckenvolumina ihre Aktivität zu verringern. Aufgrund der höheren Leistungsdichte im ersten Beckenabschnitt kommt dabei ein derartiges System insbesondere bei hochbelasteten leicht abbaubaren Abwässern mit weniger Beckenvolumen aus als konventionelle Belebungsbecken, die volldurchmischt oder in gleich große Kaskadenkammern aufgeteilt sind. Daneben lassen sich aber auch schwer abbaubare Abwasserinhaltsstoffe besser eliminieren, wobei insgesamt eine hohe Prozeßstabilität im Hinblick auf den CSB- und BSB$_5$-Abbau vor allem bei Belastungsstößen gegeben ist.

Durch die in den ersten Beckenabschnitten neben der Maximalatmung auftretenden großen Wachstumsraten werden, bei ausreichendem O$_2$-Angebot, im verstärkten Maße zusätzlich Inhaltsstoffe durch Umwandlung in Bakterienmasse aus dem Abwasser entfernt, so daß, bei Betrachtung des gesamten Systems, Sauerstoff eingespart wird.

Da die in Strömungsrichtung weiter hinten gelegenen Beckenabschnitte nur noch schwach belastet sind, sind auch die Schlammabsetzeigenschaften gut, so daß die Nachklärung entsprechend klein ausgeführt werden kann. Darüber hinaus werden aufgrund der stattfindenden Maximalatmung im ersten Beckenabschnitt bei ausreichender Sauerstoffversorgung und aufgrund der in den folgenden Beckenabschnitten geringen Belastung Schlammentartungen, wie Blähschlamm, weitgehend vermieden.

Vorteilhaft wird das erfindungsgemäße Verfahren dabei so durchgeführt, daß bei insgesamt drei vorhandenen Beckenabschnitten der erste Beckenabschnitt mit reinem Sauerstoff oder zumindest mit einem mehr Sauerstoff als Luft enthaltenden Gas begast und erst die nachfolgenden Beckenabschnitte wahlweise mit reinem Sauerstoff und/oder Luft begast werden. Damit kann auf einfache und wirtschaftliche Weise sichergestellt werden, daß das Sauerstoffangebot im ersten Beckenabschnitt bzw. in den beiden ersten Beckenabschnitten ausreichend groß ist, um die aufgrund der Maximalatmung gegebene enorm hohe Sauerstoffzehrung decken zu können. Da die Belastung in den nachfolgenden Beckenabschnitten immer weiter abnimmt, genügt es dann in den meisten Fällen, diese beispielsweise über Oberflächenbelüfter mit Luft zu begasen.

Vorteilhafterweise kann jedoch bei Eintrag von reinem Sauerstoff oder eines mehr Sauerstoff als Luft enthaltenden Gases in einzelne Beckenabschnitte das Abgas des jeweiligen Beckenabschnitts dem nachfolgenden Beckenabschnitt zugeleitet werden. Dadurch ist zum einen eine Ausnutzung des im Abgas vorhandenen Restsauerstoffgehaltes möglich und zum anderen kann dabei im Falle einer noch hohen Belastung in den weiteren Beckenabschnitten auf die Zufuhr eines eigens hergestellten, mehr Sauerstoff als Luft enthaltenen Gases verzichtet werden.

Eine Vorrichtung zur Durchführung des Verfahrens umfaßt ein mehrere Beckenabschnitte aufweisendes Belebungsbecken und eine dem Belebungsbecken nachgeschalteten Nachkläreinrichtung. Erfindungsgemäß ist eine solche Vorrichtung dadurch gekennzeichnet, daß das Belebungsbecken mindestens drei in Strömungsrichtung des Abwassers aufeinanderfolgende Beckenabschnitte aufweist und nach dem ersten Beckenabschnitt jeder einzelne Beckenabschnitt mindestens ungefähr um das Volumen des ersten Beckenabschnitts größer ist als der vorhergehende Beckenabschnitt.

Bei insgesamt drei vorhandenen Beckenabschnitten ist dabei zweckmäßigerweise der erste gegen die Atmosphäre geschlossen ausgebildet und weist eine Eintragseinrichtung für reinen Sauerstoff oder ein mehr Sauerstoff als Luft enthaltendes Gas auf, während die beiden nachfolgenden Beckenabschnitte wahlweise eine Eintragseinrichtung für reinen Sauerstoff und/oder Luft aufweisen.

Bei mindestens vier vorhandenen Beckenabschnitten sollten dagegen die beiden ersten gegen die Atmosphäre geschlossen ausgebildet sein und eine Eintragseinrichtung für reinen Sauerstoff oder ein mehr Sauerstoff als Luft enthaltendes Gas und erst die nachfolgenden wahlweise eine Eintragseinrichtung für reinen Sauerstoff und/oder Luft aufweisen.

Ist in einem Beckenabschnitt eine Eintragseinrichtung für reinen Sauerstoff oder ein mehr Sauerstoff als Luft enthaltendes Gas vorgesehen, ist es desweiteren vorteilhaft, wenn dieser Beckenabschnitt eine Abgasleitung aufweist, die an die Eintragseinrichtung des nachfolgenden Beckenabschnittes angeschlossen ist.

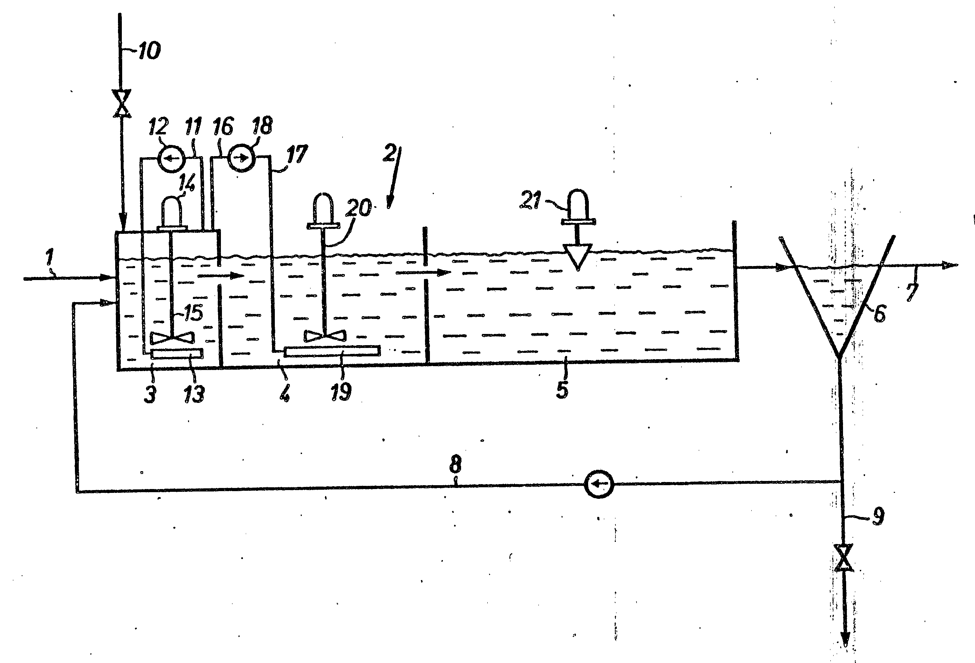

In der Zeichnung ist ein vorteilhaftes Ausführungsbeispiel einer Vorrichtung zur Durchführung des Verfahrens schematisch dargestellt, das nachstehend näher erläutert wird.

Die Figur zeigt eine biologische Abwasserreinigungsanlage mit einem Zulauf 1, mit einem insgesamt drei Beckenabschnitte 3, 4, 5 aufweisenden Belebungsbecken 2, mit einer dem Belebungsbecken 2 nachgeschalteten, als ein einfaches Sedimentationsbecken ausgebildeten Nachkläreinrichtung 6 und mit einem an die Nachkläreinrichtung 6 angeschlossenen Ablauf 7 für gereinigtes Abwasser. Zur Rückführung von belebtem Schlamm steht die Nachkläreinrichtung 6 mit dem Belebungsbecken 2 über eine Rückführleitung 8 in Verbindung, während über eine Zweigleitung 9 der Rückführleitung 8 Überschußschlamm aus der Anlage entfernt werden kann.

Erfindungsgemäß sind die Beckenabschnitte 3, 4, 5 des Belebungsbeckens 2 so ausgebildet, daß nach dem ersten Beckenabschnitt 3 jeder weitere Beckenabschnitt 4, 5 um das Volumen des ersten Beckenabschnitts 3 größer ist als der vorhergehende Beckenabschnitt. Da bei dieser Aufteilung die Substratkonzentration im ersten Beckenabschnitt 3 wesentlich höher ist, als in den beiden nachfolgenden Beckenabschnitten 4, 5, werden die über die Rückführleitung 8 in den ersten Beckenabschnitt 3 zurückgeführten Bakterien des belebten Schlamms gezwungen, bei jedem Belastungszustand die Maximalatmung zu verrichten, so daß auch eine enorm hohe Sauerstoffzehrung gegeben ist. Aus diesem Grund ist der erste Beckenabschnitt 3 gegenüber der Atmosphäre geschlossen ausgebildet und wird über eine Gaszufuhrleitung 10 mit reinem Sauerstoff oder zumindest mit einem mehr Sauerstoff als Luft enthaltenden Gas versorgt. Die Eintragseinrichtung für das Gas ist dabei so aufgebaut, daß aus der sich unter der Abdeckung des ersten Beckenabschnitts 3 ausbildenden Sauerstoffatmosphäre das über die Gaszufuhrleitung 10 zugeführte sauerstoffreiche Gas sowie das aus der Flüssigkeit aufsteigende Gas über eine Leitung 11 mit regelbarem Gebläse 12 abgezogen und zu einem nahe dem Boden des ersten Beckenabschnitts 3 angeordneten Gasverteiler 13 geleitet wird. Über dem Gasverteiler 13 ist dabei eine von einem regelbaren Motor 14 angetriebene Rührvorrichtung 15 zum innigen Mischen der vorhandenen Stoffe vorgesehen. Ein an Sauerstoff verarmtes Abgas wird über eine Abgasleitung 16 abgezogen.

Da infolge Substratabbau und größer werdenden Beckenvolumen die Atmung im zweiten und dritten Beckenabschnitt 4, 5 immer mehr abnimmt, genügt es, wenn diese Beckenabschnitte nicht mehr mit reinem Sauerstoff versorgt werden. Beispielsweise kann der zweite Beckenabschnitt 4, wie gezeigt, mit dem an Sauerstoff verarmten Abgas des ersten Beckenabschnitts 3 und der dritte Beckenabschnitt 5 über eine Oberflächenbelüftungseinrichtung 21 mit Luft begast werden, wobei dann beide Beckenabschnitte 4, 5 gegenüber der Atmosphäre offen ausgebildet sein können.

Zum Eintrag des Abgases aus dem ersten Beckenabschnitt 3 in den zweiten Beckenabschnitt 4 weist dieser einen ebenso nahe des Beckenbodens angeordneten Gasverteiler 19 mit Gaszufuhrleitung 17 auf, wobei diese Gaszufuhrleitung 17 über ein regelbares und/oder steuerbares Gebläse 18 an die Abgasleitung 16 des ersten Beckenabschnitts 3 angeschlossen ist. Zur Vermischung der in diesem Beckenabschnitt vorhandenen Stoffe ist über dem Gasverteiler 19 wiederum eine Rührvorrichtung 20 angeordnet.

Selbstverständlich können in den einzelnen Beckenabschnitten auch andere Gaseintragseinrichtungen Verwendung finden. Dabei kommt es nur darauf an, daß die Volumina der einzelnen Beckenabschnitte, wie angegeben, eingehalten und der erste Beckenabschnitt auf alle Fälle zumindest mit einem mehr Sauerstoff als Luft enthaltenden Gas versorgt wird. Ebenso können auch noch mehr Beckenabschnitte hintereinander geschaltet werden.

In der folgenden Tabelle werden verschiedene Daten für ein konventionelles und für das

erfindungsgemäße Verfahren gegenübergestellt:

| Auslegungsbeispiel | | Konventionell | Erfindungsgemäß |
|---|---|---|---|
| Volumen Kaskadenkammer I | $m^3$ | 1000 | 350 |
| Volumen Kaskadenkammer II | $m^3$ | 1000 | 650 |
| Volumen Kaskadenkammer III | $m^3$ | 1000 | 1000 |
| Gesamtvolumen Belebung | $m^3$ | 3000 | 2000 |
| Einsparung an Belebungsbeckenvol. | % | — | ca. 30% |
| Abwasserzulaufmenge Q | $m^3/h$ | 750 | 750 |
| Raumbelastung $B_R$ | $kg/m^3\,d$ | 3 | 4,5 |
| Schlammbelastung $B_{TS}$ | $kg/kg\,d$ | 0,6 | 0,9 |
| Belüftungszeit t | h | 4 | 2,7 |
| Spez. $O_2$-Verbrauch OV*) | $kg\,O_2/kg$ $BSB_5$-abgebaut | 0,65 | 0,5 |
| $O_2$-Zehrung Kaskade I $Z_I$ | $g/m^3\,h$ | 115 | 185 |
| $O_2$-Zehrung Kaskade II $Z_{II}$ | $g/m^3\,h$ | 65 | 100 |
| $O_2$-Zehrung Kaskade III $Z_{III}$ | $g/m^3\,h$ | 55 | 50 |
| Raumbelastung Kaskade I $B_RI$ | $kg/m^3\,d$ | 9 | 27 |
| Raumbelastung Kaskade II $B_RII$ | $kg/m^3\,d$ | 4 | 7,3 |
| Raumbelastung Kaskade III $B_RIII$ | $kg/m^3\,d$ | 2,1 | 2,0 |
| Schlammtrockensubstanz $TS_R$ | $kg/m^3$ | 5 | 5 |
| Schlammindex Isv | ml/g | 90 | 60 |
| $BSB_5$ im Zulauf | mg/l | 500 | 500 |
| $BSB_5$ im Ablauf | mg/l | ≦30 | ≦30 |
| CSB im Zulauf | mg/l | 650 | 650 |
| CSB im Ablauf | mg/l | ≦100 | ≦100 |

## Patentansprüche

1. Verfahren zur biologischen Reinigung von Abwasser, bei dem das Abwasser in einem Belebungsbecken mit mehreren Beckenabschnitten in Gegenwart von belebtem Schlamm mit reinem Sauerstoff und/oder Luft begast, das Abwasser-Belebtschlamm-Gemisch aus dem Belebungsbecken abgezogen und in einer Nachklärung zu gereinigtem Wasser und Schlamm aufgeteilt und der Schlamm wenigstens teilweise in das Belebungsbecken zurückgeleitet wird, dadurch gekennzeichnet, daß das Abwasser durch ein Belebungsbecken mit mindestens drei getrennten Beckenabschnitten geleitet wird und die Volumina der einzelnen Beckenabschnitte so gewählt werden, daß die in Strömungsrichtung des Abwasser aufeinanderfolgenden Beckenabschnitte jeweils mindestens ungefähr um das Volumen des ersten Beckenabschnitts größer sind als der vorhergehende Beckenabschnitt.

2. Verfahren nach Anspruch 1, dadurch gekennzeichnet, daß bei insgesamt drei vorhandenen Beckenabschnitten der erste Beckenabschnitt mit reinem Sauerstoff oder zumindest mit einem mehr Sauerstoff als Luft enthaltendem Gas begast wird und die beiden nachfolgenden Beckenabschnitte wahlweise mit reinem Sauerstoff und/oder Luft begast werden.

3. Verfahren nach Anspruch 1, dadurch gekennzeichnet, daß bei mindestens vier vorhandenen Beckenabschnitten die beiden ersten mit reinem Sauerstoff oder zumindest mit einem mehr Sauerstoff als Luft enthaltenden Gas begast und die nachfolgenden Beckenabschnitte wahlweise mit reinem Sauerstoff und/oder Luft begast werden.

4. Verfahren nach einem der Ansprüche 1 bis 3, dadurch gekennzeichnet, daß bei Eintrag von reinem Sauerstoff oder eines mehr Sauerstoff als Luft enthaltenden Gases in einzelne Beckenabschnitte das Abgas des jeweiligen Beckenabschnitts dem nachfolgenden Beckenabschnitt zugeleitet wird.

5. Vorrichtung zur Durchführung des Verfahrens nach einem der Ansprüche 1 bis 4 mit einem mehrere Beckenabschnitte aufweisenden Belebungsbecken und einer dem Belebungsbecken nachgeschalteten Nachkläreinrichtung, dadurch gekennzeichnet, daß das Belebungsbecken (2) mindestens drei, in Strömungsrichtung des Abwassers aufeinanderfolgende Beckenabschnitte (3, 4, 5) aufweist und nach dem ersten Beckenabschnitt (3) jeder einzelne Beckenabschnitt (4, 5) mindestens ungefähr um das Volumen des ersten Beckenabschnitts (3) größer ist als der vorhergehende Beckenabschnitt.

6. Vorrichtung nach Anspruch 5, dadurch gekennzeichnet, daß bei insgesamt drei vorhandenen Beckenabschnitten (3, 4, 5) der erste gegen die Atmosphäre geschlossen ist und eine Eintragseinrichtung (11, 12, 13) für reinen Sauerstoff oder ein mehr Sauerstoff als Luft enthaltendes Gas aufweist und die beiden nachfolgenden Beckenabschnitte (4, 5) wahlweise eine Eintrageinrichtung für reinen Sauerstoff und/oder Luft aufweisen.

7. Vorrichtung nach Anspruch 5, dadurch gekennzeichnet, daß bei mindestens vier vorhandenen Beckenabschnitten die beiden ersten gegen die Atmosphäre geschlossen sind und eine Eintragseinrichtung für reinen Sauerstoff oder ein mehr Sauerstoff als Luft enthaltendes Gas und die nachfolgenden wahlweise eine Eintragseinrichtung für reinen Sauerstoff und/oder Luft aufweisen.

8. Vorrichtung nach einem der Ansprüche 5 bis 7, dadurch gekennzeichnet, daß bei Vorhandensein einer Eintragseinrichtung (11, 12, 13) für reinen Sauerstoff oder ein mehr Sauerstoff als Luft enthaltendes Gas in einem Beckenabschnitt (3) dieser eine Abgasleitung (16) aufweist, die an die Eintragseinrichtung (17, 18, 19) des nachfolgenden Beckenabschnitts (4) angeschlossen ist.


## Claims

1. A process for the biological purification of sewage, in which the sewage is gassed with pure oxygen and/or air in the presence of activated sludge in an activating tank which has a plurality of tank sections, the sewage-activated sludge mixture is discharged from the activating tank and is separated in a subsequent settling step into purified water and sludge, and the sludge is at least in part returned to the activating tank, characterised in that the sewage is led through an activating tank which has at least three separate tank sections, and the volumes of the individual tank sections are so selected that the tank sections which follow one another in the direction of flow of the sewage in each case exceeds the preceding tank section in size by at least approximately the volume of the first tank section.

2. A process as claimed in Claim 1, characterised in that when a total of three tank sections are provided, the first tank section is gassed with pure oxygen or at least with a gas which contains more oxygen than air, and the two following tank sections are gassed at will with pure oxygen and/or air.

3. A process as claimed in Claim 1, characterised in that, when at least four tank sections are provided, the first two sections are gassed with pure oxygen, or at least with a gas which contains more oxygen than air, and the following tank sections are gassed at will with pure oxygen and/or air.

4. A process as claimed in one of Claims 1 to 3, characterised in that when pure oxygen or a gas containing more oxygen than air is fed into individual tank sections, the waste gas from each tank section is fed to the following tank section.

5. Apparatus for carrying out the process claimed in one of Claims 1 to 4, comprising an activating tank which has a plurality of tank sections and with a subsequent settling device which is connected to the output end of the activating tank, characterised in that the activating tank (2) has at least three tank sections (3, 4, 5) which follow one another in the direction of flow of the sewage, and after the first tank section (3), each individual tank section (4, 5) exceeds the preceding tank section in size by at least approximately the volume of the first tank section (3).

6. Apparatus as claimed in Claim 5, characterised in that, when a total of three tank sections (3, 4, 5) are provided, the first is sealed from the atmosphere and provided with a feed device (11, 12, 13) for pure oxygen or a gas containing more oxygen than air, and the two following tank sections (4, 5) are selectively provided with a feed device for pure oxygen and/or air.

7. Apparatus as claimed in Claim 5, characterised in that when at least four tank sections are provided, the two first sections are sealed from the atmosphere and provided with a feed device for pure oxygen, or a gas containing more oxygen than air, and the following sections are selectively provided with a feed device for pure oxygen and/or air.

8. Apparatus as claimed in one of Claims 5 to 7, characterised in that when a feed device (11, 12, 13) for pure oxygen or a gas containing more oxygen than air is provided in a tank section (3), the section is provided with a waste gas line (16) which is connected to the feed device (17, 18, 19) of the following tank section (4).

## Revendications

1. Procédé de purification biologique d'eaux usées dans lequel l'eau usée est traitée, dans un bassin d'activation comportant plusieurs sections, par de l'oxygène pur et/ou de l'air en présence de boue activée, le mélange eau usée-boue activée est évacué du bassin d'activation et séparé dans une étape de post-clarification en eau purifiée et en boue et la boue est au moins partiellement recyclée dans le bassin d'activation, caractérisé en ce que l'on fait d'abord passer l'eau usée à travers un bassin d'activation comportant au moins trois sections de bassin séparées et les volumes des différentes sections de bassin sont choisies de telle sorte que les sections de bassin se succèdant l'une l'autre dans le sens de l'écoulement de l'eau usée sont plus grandes que la section précédente d'au moins un volume à peu près égal à celui de la première section de bassin.

2. Procédé suivant la revendication 1, caractérisé en ce que, lorsqu'il existe en tout trois sections de bassin, on fait passer dans la première section de l'oxygène pur ou tout au moins un gaz contenant plus d'oxygène que l'air et l'on fait passer au choix dans les deux sections suivantes de l'oxygène pur et/ou de l'air.

3. Procédé selon la revendication 1, caractérisé en ce que, lorsqu'il existe au moins quatre sections de bassin, on fait passer dans les deux premières sections de l'oxygène pur ou tout au moins un gaz contenant plus d'oxygène que l'air et, dans les sections suivantes, on fait passer au choix de l'oxygène pur et/ou de l'air.

4. Procédé suivant l'une quelconque des revendications 1 à 3, caractérisé en ce que, lorsque l'on introduit de l'oxygène pur ou un gaz contenant plus d'oxygène que l'air dans les différentes sections du bassin, le gaz ayant servi dans l'une des sections du bassin est chaque fois réintroduit dans la section de bassin suivante.

5. Dispositif de mise en œuvre suivant les revendications 1 à 4, comportant un bassin d'activation possédant plusieurs sections de bassin et une installation de post-clarification disposée à la suite du bassin d'activation, caractérisé en ce que le bassin d'activation (2) comporte au moins trois sections de bassin (3, 4, 5) se succèdant l'une l'autre dans le sens de l'écoulement de l'eau usée, chaque section de bassin (4, 5) disposée après la première section de bassin (3) étant plus grande que la section précédente d'un volume au moins à peu près égal à celui de la première section de bassin (3).

6. Dispositif selon la revendication 5, caractérisé en ce que, lorsqu'il existe en tout trois sections de bassin (3, 4, 5), la première section est fermée vis-à-vis de l'atmosphère et comporte un dispositif d'introduction (11, 12, 13) d'oxygène pur ou de gaz contenant plus d'oxygène que l'air et les deux sections de bassin suivantes (4, 5) comporte un dispositif d'introduction au choix d'oxygène pur et/ou d'air.

7. Dispositif suivant la revendication 5, caractérisé en ce que, lorsqu'il existe au moins quatre sections de bassin, les deux premières sections sont fermées vis-à-vis de l'atmosphère et comporte un dispositif d'introduction d'oxygène pur ou d'un gaz contenant plus d'oxygène que l'air et les sections suivantes comportent un dispositif d'introduction au choix d'oxygène pur et/ou d'air.

8. Dispositif suivant les revendications 5 à 7, caractérisé en ce que, lorsqu'il existe un dispositif (11, 12, 13) d'introduction d'oxygène pur ou d'un gaz contenant plus d'oxygène que l'air dans une section de bassin (3), celle-ci comporte une conduite (16) d'évacuation du gaz utilisé vers le dispositif (17, 18, 19) d'introduction de gaz dans la section suivante (4) du bassin.